# EUROPEAN PATENT APPLICATION

(11) **EP 2 977 802 A1**
(43) Date of publication of application: **27.01.2016**
(21) Application number: 14178577.4
(22) Date of filing: 25.07.2014
(51) Int. Cl.: G02B 6/38

(54) **Method for protecting a connector unit**

(71) Applicant: Siemens Aktiengesellschaft, 80333 München (DE)
(72) Inventor: Worthington, John-Paul, Ulverston, LA12 7DJ (GB); Armistead, Robert, Ulverston, LA12 9DU (GB)

(57) **Abstract**

The present invention relates to a method for protecting a connector unit (10) comprising a first connector part (12, 14) and at least a second connector part (12, 14) each having a connecting region (15, 15'), wherein the first connector part (12, 14) and the at least second connector part (12, 14) are embodied in such a way to establish a physical connection after a mate of the first connector part (12, 14) and the at least second connector part (12, 14), wherein at least one connecting region (15, 15') of the first connector part (12, 14) and/or of the at least second connector part (12, 14) is protected by a fluid (16).

To provide a safe, reliable and failure proof operation of the connector unit the method comprises the step of: characterised by the step of: Using a fluid (16) that is embodied in such a way to change its viscosity to protect the at least one connecting region (15, 15').

## Description

### Field of invention

The present invention relates to a method for protecting a connector unit comprising at least two connector parts each having a connecting region. Further, the present invention relates to connector part embodied to perform the inventive method, further to a connector unit with a connector part and to a use of the connector part in a subsea application.

### Art Background

In the near future an increasing demand for communication over wide distances, especially for example between continents will be needed. Hence, infrastructures, like sea cables and connectors linking sea cables and modules, e.g. subsea modules, like transformers, pumps etc., that are located and operated without proof subsea will be essential. For example, within the oil and gas industry there is an increasing requirement for high performance subsea optical connectors.

Fibre optics are known to be used in subsea connectors. Such an optical fibre is capable of carrying large volumes of data reliably and with minimal interference (such as from electromagnetic sources that would potentially effect traditional electronic transmittal). Due to the size and fragile nature of the contacting faces of the fibre optic ferrules, they must be protected from harsh conditions. They are extremely susceptible to damage from particles being trapped between the mating faces.

Contaminants on the surface face of a fibre optic connection can cause numerous problems - due to the small surface area of the fibre core any debris on the surface can scatter significant amounts of light, thus degrading the optical performance. If any contaminants are on the contact face when the connector is mated the connection could be held off, or the contaminant could be forced into the face of the ferrule, causing permanent damage. Under normal conditions, a fibre optic connection would be thoroughly cleaned before every mating -this is not possible in every environment and especially not in a subsea environment.

It is a first objective of the present invention to provide a method that establishes a protective and clean environment for the mate of the connector parts to take place as well as maintaining this environment and that allows effective cleaning of the connector unit and thus to provide a unit that can be operated reliably, safely and is less insusceptible to errors, in comparison to state of the art systems.

It is a further objective of the present invention to provide a connector part that allows and supports the establishing of the protective environment as well as the cleaning in an effective, secure and space saving manner.

It is still a further objective of the present invention to provide a connector unit that is failure proof, reliable and that can be manufactured with low costs.

It is still another objective of the present invention to provide a use of the connector part that allows an application of the connector part that is subjected to high standard.

These objectives may be solved by a method, a connector part, a connector unit and a use according to the subject-matter of the independent claims as well as to the specification.

### Summary of the Invention

According to a first aspect of the present invention, a method for protecting a connector unit is provided, wherein the connector unit comprises a first connector part and at least a second connector part each having a connecting region, wherein the first connector part and the at least second connector part are embodied in such a way to establish a physical connection after a mate of the first connector part and the at least second connector part, wherein at least one connecting region of the first connector part and/or of the at least second connector part is protected by a fluid.

It is proposed, that the method comprises the step of: Using a fluid that is embodied in such a way to change its viscosity to protect the at least one connecting region.

Due to the inventive matter, a safe, reliable and failure proof operation of the connector unit can be provided. Moreover, a chance of an unforeseen - e.g. optical - breakdown of the connector unit due to an unprotected and thus weakened and/or defected and/or contaminated surface can be reduced. Hence, a system with less operational issues, compared with state of the art systems, may advantageously be provided. In addition, with this inventive concept a complexity of the connector unit as well as the costs of the pieces and for an assembling can be reduced. Moreover, assembly procedure is simplified, reducing the overall number of components and allow easy access to the components, like optical fibre ferrules. Further, the connecting regions with e.g. connecting faces are more protected and much cleaner when compared with current state of the art systems. Moreover, a greater number of mates and de-mates can be performed in comparison with state of the art methods or systems.

By protecting the connecting region(s) of the connector parts or unit with the viscosity variable fluid a clean mating environment for the connector unit can be provided and maintained and the mating of the connector parts can be performed cleanly. Furthermore, by using the viscosity variable fluid it can perform different functions during the mate/de-mate or in different states of the connector unit, like an unmated or mated state. E.g. in the unmated or mated state the fluid is static and protects structures, such as the connecting faces of the connecting parts, from damage, like sea water, contaminates, temperature or pressure fluctuation etc. In turn, during the mate or de-mate the fluid is less viscous and thus flowable and can be used for a cleaning process (see below).

Even if the terms "part, region, fluid, pump, face, nozzle assembly, optical fibre, end face, reservoir, shutter, aperture, passage, sleeve, barrel, bottom, action member, casing, action structure, pin, key, keyway, path, opening, channel, cavity, tube, bore, insert, port and spring" (see also below) are used in the singular or in a specific numeral form in the claims and the specification the scope of the patent (application) should not be restricted to the singular or the specific numeral form. It should also lie in the scope of the invention to have more than one or a plurality of the above mentioned structure(s).

A connector unit is intended to mean a unit which physically connects at least two parts, like two cables, preferably subsea cables, or a cable with a - subsea - module (e.g. a transformer, a pump etc.) or a busbar inside of the module or two modules, respectively. Thus, it is preferably a subsea connector unit. The connector unit may be used in any harsh environment and may be embodied as an optical or an electrical connector and/or penetrator or preferably as a wet mateable connector/penetrator. Moreover, it is preferably employed in an optical application.

Such a connector unit comprises at least two mateable connector parts that in the embodiment as an optical connector unit each comprises at least one optical fibre, wherein the optical fibre of the first connector part and the optical fibre of the at least second connector part are embodied in such a way to establish an optical connection after a mate of the first and second connector part.

In case of the connector unit as an electrical connector unit the unit comprises at least a conductor part that helps to establish an electrical connection in a mated position of two connected parts, like two cables or a cable with a module. This conductor part may be a conductor pin, receptacle pin or male part of a connector or of a penetrator or a socket contact of a female part, plug or socket or connector body of a connector for contacting a conductor pin of a male part. Thus, the connector part is embodied as the male part and/or as the female part. This may also apply to the connector parts of the optical connector unit in case one optical fibre of the first connector part is embodied to pass into a body of the second connector part to connect with the optical fibre of the second connector part.

Hence, the female part is intended to mean a part of the connector unit with an opening, recess, bore or cavity to receive another part of the connector unit, like the an optical fibre. Moreover, in case of an embodiment of the connector unit as comprising a penetrator one optical fibre is permanently connected to a cable or a module via a housing.

A connecting region is intended to mean an entity comprising regions, space or parts being relevant for the mate or the connection of the connector parts. This may be the space or cavity in which the parts that will be connected (e.g. optical fibres) are located before, during or after the mate/de-mate as well as the connecting part itself or structures of the connector part surrounding or being located adjacent to the connecting part, like a receiving cavity, a mounting tube, a shroud tube, a split sleeve, a shutter unit or a part thereof (see below). To provide sufficient protection the fluid is locatable in the connecting region or is located in the connecting region at least after the mate.

In this context "protecting" is intended to mean that the connector part or parts thereof, like the connecting part or surrounding structures (see above), are protected from negative, operatively obstructive or detrimental - external - effects or forces, like sea water, contaminates, temperature or pressure fluctuation, electrical issues etc.

Under a physical connection should be understood any connection feasible for a person in the art, like optical, electrical or magnetical. Moreover, the term "inducing" should be understood as causing, generating, evoking or encouraging.

The fluid may be any fluid feasible for a person skilled in the art that can change its viscosity. That may be induced by any mechanism or stimulus suitable for a person skilled in the art, like temperature, ultra sound, radiation (UV, VIS, IR, laser etc.), mechanical stress, shear stress, pressure, an electric field, voltage changes, magnetism etc.

Preferably the fluid is a gel with optical properties that are index matched to the properties of the respective used optical fibre. This optical gels are specifically designed to operate with a fibre optic connector unit - they have a refractive index matched to that of the fibre optic allowing excellent connection and are designed to protect the highly sensitive mating faces of fibre optic ferrules. They are highly inert substances, so the chance of adverse reaction from other materials is limited. Optical performance and viscosity of e.g. the above named gels were both found to be unaffected by temperature extremes (-25°C to +50°C) and thus suitable for a wide field of use.

The optical fibre is a part of a ferrule that may be of any type or construction feasible for a person skilled in the art. In the following text the terms optical fibre and ferrule are used as synonyms. Thus, it would be possible to use a so called MT ferrule (MT = Mechanical Transfer) or to use an "individual" ferrule that e.g. houses only one optical fibre which is aligned with another ferrule using a split sleeve and is not gender specific. Moreover, a number of optical fibres can be selected according to the needed specifications of the connector unit and can be any number feasible for a person skilled in the art. Hence, it is also possible to employ one ferrule with more than one optical fibre, e.g. 12 or 24, or several ferrules, e.g. 8 or more, with just one optical fibre. Furthermore, the orientation of the optical fibre or the ferrules may be any one a person skilled in the art sees fit but preferably, the optical ferrule is placed in parallel with the connector mating axis what significantly simplifies the internal mate procedure in comparison with state of the art systems. Also a timing of the mate would be uncritical.

According to an advantage realisation of the invention it is provided that the method comprises the steps of: Providing a first protection mechanism, especially a cleaning mechanism, by changing the viscosity of the fluid from a first viscosity to a second viscosity and providing a second protection mechanism, especially a barrier mechanism, by changing the viscosity of the fluid from the second viscosity back to the first viscosity. As stated above the fluid is able to perform different functions. The first viscosity is less viscous than the second and preferably it holds the fluid in the static condition. Hence, the fluid can act as a barrier in the connecting region or around the connecting part, like the ferrule. In this state the fluid can also maintain a protective and clean environment in the connecting region. Due to the change from the first static viscosity to the second viscosity the fluid becomes flowable and is able to travel along a flow path. While the fluid bypasses the connecting region or the connecting part it can be used to clean these parts or surfaces thereof.

Furthermore, it is provided that the method comprises the step of: Changing the viscosity of the fluid by applying an increased shear stress. Thus, the adjustment of the fluid may be realised flexibly and easily. The shear stress may be applied by any method or mechanism feasible for a person skilled in the art, e.g. by applying a magnetic field, an electrical field or by varying or applying a pressure. Preferably, the method comprises the step of: Changing the viscosity of the fluid by applying a pressure increase. Or in other words, the spear stress is induced or increased by applying a pressure increase and/or increasing a pressure load stress acting on the fluid. With this the change of viscosity can be triggered constructively easy.

Advantageously, the fluid is a thixotropic fluid or gel. Thus, the viscosity change is a *per se* characteristic of the fluid. The thixotropic fluid may be any fluid feasible for a person skilled in the art and may for example be NyoGel OC-431A, Cargille 0608, Thorlabs G608N. Moreover, it would be also possible to use a combination of two or more thixotropic fluids/gels.

Since the fluid is thick or basically solid under static conditions the thixotropic fluid can be used for sealing of the connector unit since the thixotropic fluid can act as a barrier to the environment of the connector unit e.g. seawater or contaminants. Thus, the optic fibres are effectively protected. Moreover, additional sealing means can be omitted, saving mounting time and space as well as pieces and costs.

In general, the thixotropic fluid should prevent contaminants from reaching the optical fibre or ferrule itself; however, in the event any do reach the ferrule, a cleaning mechanism should prevent them from interfering with the performance of the optical connection. Advantageously, all functional components of the fibre optic connection will be encapsulated within the thixotropic fluid. Moreover, due to the optical properties of the thixotropic fluid, the optical connection would be unaffected by a small amount of the fluid trapped between the two optical ferrules or this amount should not affect the optical performance of the mated connector unit.

Moreover, the inventive method comprises the step of: Inducing a flow of the fluid by changing the viscosity of the fluid to clean the at least first connector part. Thus, the traveling of the fluid along the flow path can be triggered easily resulting in the cleaning of the connector part or the connecting region.

Due to a further realisation of the invention the method comprises the step of: Cleaning the at least first connector part with the flow of the fluid throughout the mate of the first connector part and the at least second connector part. Hence, sensitive parts of the connector unit are cleaned the whole time of the mate enabling an undisturbed mating and thus connection of the optical fibres. In this context "throughout the mate" should be understood as during the mate or from the first physical contact of the mating parts till the connection is fully established. To ensure this the fluid is completely cycled around the optical fibre or ferrule to remove debris and/or contaminates. Thus, the principal of using an active cleaning of the mating faces of the contacting ferrule using the thixotropic optical gel whilst simultaneously "flushing" the connecting region and/or the area immediately around the fibre optic ferrule with the thixotropic optical gel to maintain cleanliness. In this context a mate starts when the connector parts or part thereof make their first physical contact with each other. Generally, there may also be a cleaning action in the unmated state of the connector parts or in the fully mated state.

In this context "cleaning" should be understood as a conditioning, changing, modifying of the connecting region and/or the connector unit or at least a part or a section of the connector and especially as a removing of contaminations on the unit. The part or section would advantageously be at least one optical fibre or especially a connecting face thereof.

According to a still further aspect of the invention the method comprises the step of: Cleaning the at least first connector part with the flow of the fluid throughout a de-mate of the first connector part and the at least second connector part. When the fluid cycles or is also pumped during the de-mate sequence of the connector unit, it is ensured that a drawn back of contaminated fluid into the mating environment is hindered and leaving the optical fibre or the ferrule surrounded by clean gel when left de-mated.

Moreover, the method comprises the step of: Cleaning the at least second connector part with the flow of the fluid, especially throughout the mate and/or de-mate of the first connector part and the at least second connector part. This ensures that both the optical fibres are clean to establish the optical connection undisturbed by contaminations.

According to a further aspect of the invention the method comprises the step of: Activating the change of viscosity, especially by increasing a pressure on the fluid, by the mate of the first connector part and the at least second connector part. Hence, the pressure can be increased by an existing step or action during the mate. Advantageously, a separate means for the pressure change can be omitted, saving space and costs. By using the mate activated flow of the fluid for cleaning the need to dismantle the connector part for cleaning, e.g. the optical ferrule, can be avoided. Further, the mate activated cleaning can be seen as an integration of a self-cleaning system into the connector unit improving its reliability. Additionally, since the mating process drives the cleaning flow the flow of the fluid will automatically adjust to the mating speed.

The pressure increase can be activated either by a direct action of one of the connector parts or parts thereof on the fluid e.g. due to an induced volume displacement of the fluid, or by a separate means that is activated by the mate of the connector parts. This activation may be performed by any mechanism feasible for a person skilled in the art, like mechanically, electrically or optically. The means may be a hydraulic piston arrangement e.g. being in flow communication with the displaced fluid or a separate pump pumping the now viscous fluid after its activation due to the mate.

Moreover, the method comprises the step of: Activating the change of viscosity by a de-mate of the first connector part and the at least second connector part. Hence, once again special means for creating the flow of the fluid can be omitted, saving, space, mounting efforts and costs. In combination with the change of the viscosity occurring by the mate the action of activating the change of viscosity by the de-mate could be seen as deactivating and/or reversing the change in viscosity. When the change of viscosity is caused by an effect on the pressure of the fluid it would be a pressure decrease. In case of using a pump the pumping action also occurs on the de-mate stroke.

In other words, the inventive method uses the idea of making use of the thixotropic fluid during the mate and/or de-mate by displacing the fluid due to an ingress of the connector part or parts thereof to clean the connector unit. Moreover, the method is used to mate the connector unit and preferably a fibre optic connector cleanly.

Advantageously, the method comprises the step of: Establishing the flow of the fluid by a dual action pump. This provides a robust flow of fluid. A dual action pump is a pump that displaces a volume during both stroke directions, so during mating fluid is pumped and during de-mating fluid is pumped. The pump may be embodied as any pumping device feasible for a person in the art and may be arranged in any manner suitable, thus it may be a separately embodied device from a connector part or it may be inserted or embodied as an integral feature of the connector unit/part. The pumping direction of the fluid for the two pumping action may be contrariwise or preferably the same direction.

The pressure generated by the pump may have any value feasible for a person skilled in the art and depends on the eventually adjusted or established viscosity or resistance of the fluid as well as the construction of the respective flow path of the fluid. Experimentally, it has been found that a rather low pressure is sufficient for suitable thixotropic fluids. For example, a pressure generated by a manually operated syringe seems to be sufficient. Such a pressure is well within the convenient range of manual assembly and a ROV's (Remotely Operated Vehicle's) robot arm capability. The fluid in the connector unit placed subsea will experience depth pressure - but this will be a balanced pressure not causing it's viscosity to lower, only the pumping action of the mate will raise the shear rate of the fluid causing it to move.

Due to the nature of thixotropic substances (a thixotropic substance will remain viscous under static conditions, but its viscosity decreases as the shear rate increases), the fluid will maintain its position until it is intentionally pumped (flushed). Thus, when the connector unit is mated, the pump system will be actuated, moving the contaminated or dirty fluid away from the optical fibre or ferrule and into an exhaust chamber or storage reservoir, whilst simultaneously pumping fresh, clean fluid into a cavity around the optical fibre or ferrule. The process of pumping the fluid through a manifold of the connector unit will, through the position of the internal ports, force fluid over the mating face of the optical fibre or ferrule, thus cleaning it of potential contaminates. During connector mating, one half of the connector parts optical fibre will be pushed into the mating half (along with a quantity of the optical thixotropic fluid) to attain the required optical connection. Advantageously, the method comprises the further step of: Storing the unused fluid in a first storage reservoir of the connector unit before the mate of the first connector part with the at least second connector part. Thus, enough fluid is stored for several cleaning and thus mating cycles. Furthermore, the method comprises the further step of: Storing the used fluid in a second storage reservoir of the connector unit after the mate of the first connector part with the at least second connector part. As a result, fluid with the contaminations is stored away from the sensitive connection. Generally, the capacity of the storage reservoirs for the fluid is up to 250 mate and de-mate cycles. That would be the lifetime of the connector unit and thus no replenishment of fresh fluid would be needed.

According to a further aspect of the invention a connector part comprising a connecting region of a connector unit is provided. The connector part is embodied in such a way to establish the physical connection after the mate of the connector part and the at least second connector part of the connector unit, wherein at least one connecting region of the first connector part and/or of the at least second connector part is protected by a fluid.

It is proposed that the fluid is a fluid that changes its viscosity, especially due to an applying of an increased shear stress, and specifically by applying a pressure increase.

Due to the inventive embodiment, a safe, reliable and failure proof connector unit can be provided. Furthermore, a chance of an unforeseen - e.g. optical - breakdown of the connector unit due to an unprotected and thus weakened and/or defected and/or contaminated surface can be reduced. Hence, a system with less operational issues, compared with state of the art systems, may advantageously be provided. In addition, with this inventive construction a complexity of the connector unit as well as the costs of the pieces and for an assembling can be reduced. Moreover, assembly procedure is simplified, reducing the overall number of components and allow easy access to the components, like the optical fibre ferrules. Further, the connecting regions with e.g. connecting faces are more protected and much cleaner when compared with current state of the art systems. Moreover, a greater number of mates and de-mates can be performed in comparison with state of the art methods or systems. By applying an (increase) shear stress the adjustment of the fluid may be realised flexible and easily and the change of viscosity can be triggered constructively easy when using a pressure increase. As stated above, the effects would be especially beneficial by using the concept of utilising a thixotropic and optical fluid to protect, isolate and clean the connecting region or a mating face of the optical fibre ferrule whilst flushing the mating environment.

In an advantageously embodiment of the invention the fluid is at least one thixotropic fluid. Thus, the viscosity change is a *per se* characteristic of the fluid. Beneficially, the fluid can be used for sealing and for cleaning of the connector unit due to its static state in the fully mated or the de-mated state and its flowable state during the mate. Moreover, additional sealing means can be omitted, saving mounting time and space as well as pieces and costs. Further, the optic fibres are effectively protected.

As stated above one of the connector parts can be seen as a male part because during the mate its optical fibre will protrude - axially - from a housing of the connector part and will engage in an opening of the corresponding connector part that can be consequently viewed as a female part. To assist a movement of the optical fibre of the male part and further to protect it from mechanical damage during transition from the receptacle (male part) into the plug insert (female part) the optical fibre or the ferrule is positioned axially in a shroud tube. The shroud tube also holds a volume of fluid in front of the optical fibre or ferrule to protect the ferrule from contamination when passing through the dirty region of front faces of the connector parts. Generally, other protecting aids would be also feasible.

To assist the - e.g. horizontal - alignment and the connection of the engaging optic fibres or ferrules at least one of the connector parts may comprise an alignment aid that could be embodied in any way feasible for a person skilled in the art. For example, in case of mating single fibre ferrules the female part comprises a split sleeve to assist the alignment or mating. During the mate first an axial end of the optical fibre of the female part is inserted into the precision made split sleeve and subsequently a corresponding axial end the optical fibre of the male part is inserted in contrariwise direction to establish the connection between the axial ends. The shroud tube and the split sleeve may be out of a ceramic or a metal.

As stated above the connector part comprises the at least first optical fibre and the at least second connector part comprises the at least second optical fibre and the first optical fibre and the at least second optical fibre are embodied in such a way to establish the optical connection after a mate of the first connector part and the at least second connector part. Preferably, the first and/or the second connector part and/or the first optical fibre and/or the at least second optical fibre comprises a connecting face. Advantageously, the connecting face is an end face of the at least first optical fibre, providing a suitable positioned area for the connection.

In a further advantageous realisation of the invention the connector part comprises at least one nozzle assembly that directs the fluid purposefully to the connecting face. Due to this the connecting face can be cleaned efficiently and to a high degree. A connecting face is intended to mean the face or surface of the optical fibre that mediates the direct physical or optical contact with the respective other connecting face. Hence, it could be understood as a contacting face. A small amount of fluid trapped between the end faces should not hinder the usage of the wording "direct contact". In this context the phrase "directs the flow purposefully" should be understood in that the nozzle assembly channels the fluid in a specific way or creates a targeted flow to actively clean the connecting face or a critical contacting end face of the ferrule. At the same time the fluid also cleaning the area around the ferrule due to the flushing of the surrounding space. To facilitate the targeted flow the nozzle assembly it advantageously arranged in close proximity to the connecting face.

In a further aspect of the invention and as stated above the connector part comprises a first storage reservoir and at least a second storage reservoir for the fluid, wherein the first storage reservoir and the at least second storage reservoir are in flow communication with each other at least during the mate of the first connector part and the at least second connector part. Consequently, a close cycle of cleaning fluid is possible. The first storage reservoir is preferably used to store the unused clean fluid before the mate of the first connector part and the at least second connector part and the second storage reservoir is used to store the used or contaminated fluid after the mate of the first connector part and the at least second connector part. By storing the used fluid a leakage to the surrounding environment can be prevented and as a result an environmental impact is advantageously minimized or environmental damage is avoided.

Preferably, both connector parts are provided with both storage reservoirs, thus having two flow cycles in the connector unit one in each connector part. It would be also possible to have only one set of storage reservoirs. Either both storage reservoirs are positioned in one connector part and the other connector part comprises flow channels to distribute the fluid through this connector part and to the structures to be cleaned. Or each connector part comprises one of the reservoirs and both connector parts comprise corresponding flow channels for the distribution of the fluid from one reservoir to the other and to clean the connector part.

Furthermore, the connector part comprises a shutter unit with a first shutter and at least a second shutter. Hence, functional elements of the connector unit will be protected from the local environment. Preferably, the first shutter and the at least second shutter each comprises at least one aperture resulting in a constructively easy exit or entry possibility.

The invention reveres further to a connector part of a connector unit with at least one shutter unit with a first shutter and at least a second shutter.

It is proposed that the first shutter and the at least second shutter are rotatable in such a way that in at least one rotational state the at least one aperture of the first shutter and the at least one aperture of the at least second shutter are arranged flush with each other. Consequently, an opening and closing of the shutter unit is facilitated constructively easy. Due to the flush arrangement of the apertures a passage for at least one connecting part comprising a connecting face is established. Preferably, the connecting part is an at least first optical fibre. As a result, the optical fibre an exit and enter the respective connector part unhindered and quick.

Preferably, the first shutter is attached radially fixed to a casing of the connector part and the at least second shutter is arranged rotatable in respect to the first shutter and thus the casing. Moreover, the first shutter and the at least second shutter are arranged coaxially in respect to an axis of the connector part and/or towards each other. This enabled a space saving construction of the connector part.

In a preferred realisation of the invention a rotational axis of the first shutter and/or the at least second shutter is an axis of the connector part. Due to this, the connector part has a reduced radial width in comparison to state of the art construction that for example uses a rotation substantially perpendicular to a longitudinal axis of the connector part.

Preferably, the first shutter and the at least second shutter are both embodied as a sleeve providing shapes that are purposefully selected to match each other. Advantageously, the first shutter is arranged in radial direction outwardly in respect to the at least second shutter providing a space saving arrangement of the shutters. Consequently, the first shutter is an external or outer shutter and the at least second shutter an internal or inner shutter. Moreover, the first or external shutter encompasses the at least second or internal shutter.

To facilitate the exiting or entering of the at least one connecting part into and out of the shutters easily the at least one aperture of the first shutter and the at least one aperture of the second shutter is arranged in a bottom of the sleeve extending basically perpendicular to an axis of the connector part. Preferably, the first shutter and the at least second shutter each comprise a plurality of apertures. Thus, several optical fibres can exit or enter the shutters undisturbed from one another. Preferably, a number of the passing optical fibres and a number of the apertures of both shutters are the same. A smooth and balanced opening and closing of the shutter unit, even with several apertures, can be performed when the apertures of the first shutter and the apertures of the at least second shutter are distributed homogenously over a circumference of the respective bottom of the respective sleeve.

The apertures may have any shape feasible for a person skilled in the art, like circular, rectangular, triangular, oval, egg-shaped etc. Preferably it is circular to provide a smooth and homogeneous exit and entry.

According to a preferred realisation of the invention the rotation of the first shutter and the at least second shutter towards each other is activated by the mate or the de-mate of the first connector part and the at least second connector part. Hence, additional means for activating the shutter unit can be omitted saving space, parts and costs. The shutter mechanism can be seen as self-activated by the mate or de-mate. Preferably, the mate or de-mate induces an axial displacement of the shutter unit providing a direct mediation of the mate or de-mate.

In a further embodiment of the invention the shutter unit comprises at least one action member for opening or closing the apertures of the first shutter and the at least second shutter and/or for causing the rotation of the first shutter and the at least second shutter towards each other. Hence, the action of the shutter unit can be mediated directly via the action member. To provide the movement relative to a casing of the connector part the casing comprises at least one corresponding action structure for interaction with the action member of the shutter unit. To mediate the rotation of the shutter unit or the internal shutter, respectively, the action member and the action structure are arranged rotateably in respect to each other. The action member and the action structure represent the activating part of the shutter mechanism.

The action member and the action structure may be any structure feasible for a person skilled in the art, like a groove, a hook, a pin, a hole, a magnetic device and a corresponding magnetic material, and preferably a key and a corresponding keyway. The key and the keyway may be arranged or attached to or formed in the rotatable shutter (second or internal shutter) or in the casing. To connect the rotatable shutter to the casing the key engages in the keyway of either the action member or the action structure. An especially stable and secure mechanism can be provided when the action member or the shutter unit is a keyway and the action structure of the casing is a key. Thus, the key would be in a radially and axially fixed position and the helical keyway would be moveable or rotatable about the key.

Due to this interaction, the internal shutter is proposed to rotate in a predefined manner depending of the characteristics or geometry of the keyway, like a shape, length, curvature or an angle. The construction of the keyway is selected in respect to a distance of the axial displacement of e.g. the shutter unit or a receptacle assembly and to the amount of rotation needed to open or close the apertures. Thus, the keyway is a helical keyway with directional vectors in axial and circumferential direction.

For the key to bypass or bridge the rotateably fixed first or external shutter this shutter comprises an opening in the axial height of the key and the keyway. Moreover, the opening has an axial length to allow the axial displacement of the shutter unit or the receptacle assembly in respect to the fixed action structure of the casing. To provide a homogeneous rotation the shutter unit and the casing may comprise two or more action members and corresponding action structures.

To hold the connector parts in a rotationally and axially fixed position after the mate the connector unit comprises at least one locking arrangement that could be embodied as any arrangement feasible for a person skilled in the art, like a recess with a corresponding pin or hook, a magnetic unit, a press fit of at least two parts etc. For example it may be embodied as a snap ring embodied to enter a snap ring groove. The snap ring is preferably arranged at the female part and the snap ring groove at the male part.

The invention further relates to a connector unit with the first connector part and with the at least second connector part, wherein the first connector part and the second connector part are embodied in such a way to establish the physical connection after the mate of the first connector part and the at least second connector part.

It is proposed that the connector unit comprises the first storage reservoir and the at least second storage reservoir for the fluid, wherein the first storage reservoir and the at least second storage reservoir are in flow communication with each other via at least one connecting channel of the first connector part and/or the second connector part at least during the mate of the first connector part and the at least second connector part.

Due to this inventive construction, fluid can be transported from one connector part to the other or to the respective storage reservoir. This, construction saves space and costs.

According to a still further aspect of the present invention a use of the connector part in a subsea application is proposed. Hence, a reliable connector part can be applied in an environment where high security standards are essential.

The above-described characteristics, features and advantages of this invention and the manner in which they are achieved are clear and clearly understood in connection with the following description of exemplary embodiments which are explained in connection with the drawings.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
- FIG 1:: shows schematically in a cross sectional view a subsea optical connector unit with two connector parts in a first mating stage,
- FIG 2:: shows schematically in a cross sectional view one of the connector parts from FIG 1 with a flow path of a cleaning fluid,
- FIG 3:: shows the flow pass from FIG 2 in a block diagram,
- FIG 4:: shows a first alternative path of a cleaning fluid in a block diagram,
- FIG 5:: shows a second alternative path of a cleaning fluid in a block diagram,
- FIG 6:: shows a schematically front view of a shutter unit in a closed configuration in an unmated state of the connector unit,
- FIG 7:: shows a schematically front view of the shutter unit from FIG 6 in a mid-opened configuration during the mate of the connector unit,
- FIG 8:: shows a schematically front view of a shutter unit from FIG 6 in an opened configuration in the mated state of the connector unit,
- FIG 9:: shows an internal shutter of the shutter unit from FIG 6 with a keyway,
- FIG 10:: shows an alternatively embodied internal shutter with a key,
- FIG 11:: shows an alternatively embodied casing with a keyway,
- FIG 12:: shows in a schematically cross sectional view the connector unit from FIG 1 in a second mating state,
- FIG 13:: shows in a schematically cross sectional view the connector unit from FIG 1 in a third mating state and
- FIG 14:: shows in a schematically cross sectional view the connector unit from FIG 1 in a fully mating state of the connector parts.

### Detailed Description

The illustrations in the drawings are schematically. It is noted that in different figures, similar or identical elements are provided with the same reference signs.

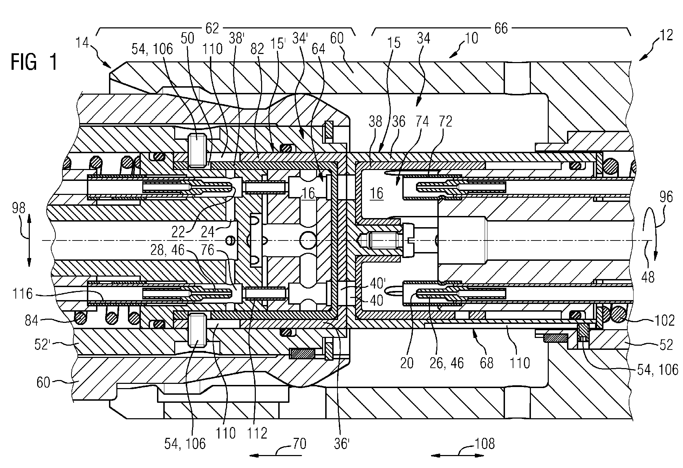

FIG 1 shows a wet mateable subsea optical connector unit 10 for connecting two connected parts, like two subsea cables (not shown), wherein the connector unit 10 comprises two connector parts 12, 14 in the form of a first or a male part 12 (receptacle) and a second or a female part 14 (plug) that are embodied in such a way to establish a physical and specifically an optical connection after a mate of the male part 12 and the female part 14. Both connector parts 12, 14 comprise a connecting region 15, 15' with several regions and parts taking part in the connecting of the connecting parts 12, 14 (see below). The connector parts 12, 14 are intended for a use in a subsea application.

Both the male part 12 and the female part 14 are each encased in a housing 60, which will be axially aligned during a mating or demating process of the male part 12 and female part 14. The housings 60 of each connector part 12, 14 is embodied as a casing of a metal body work. Additionally, the whole connecting end regions of the male and female parts 12, 14 may be further encased in an outer housing (not shown). The female part 14 is located at a plug front end 62 of one subsea cable and comprises an axially receiving cavity 64 that is a part of the connecting region 15'. The male part 12 is located at a receptacle front end 66 of the other subsea cable and comprises a receptacle assembly 68 (details see below).

For a mating of the male part 12 and female part 14 the receiving cavity 64 and the receptacle assembly 68 will be arranged axially aligned towards each other, so that by moving the receptacle assembly 68 in direction of the female part 14 or the moving direction 70, the receptacle assembly 68 can partially enter the receiving cavity 64 of the female part 14. Due to a proper positioning of the receptacle assembly 68 in the receiving cavity 64 of the female part 14 an optical connection is established between the male part 12 and the female part 14.

Both connector parts 12, 14 comprise several ferrules with optical fibres 26, 28, wherein for each connector part 12, 14 only two ferrules are shown in the cross sectional view. Axial ends of the ferrules or optical fibres 26, 28 each comprise as an end face 20, 22 a connecting face 20, 22 for establishing an optical connection between the male part 12 and the female part 14 or their respective optical fibres 26, 28 in the mated state of the two connector parts 12, 14.

In the unmated state and in the first mating state shown in FIG 1 the axial ends of the ferrules or optical fibres 26 of the male part 12 are positioned in shroud tubes 72 to be protected during the transition of the optical fibres 26 during the mate as well as during an exit from the male part 12 (see below). The ferrules and the shroud tubes 72 are parts of the receptacle assembly 68. The axial end of the optical fibres 28 of the female part 14 are positioned in the unmated state and in at least the first mating state in a bore 76 of the female part 14. The shroud tubes 72 may build a receiving cavity 74 for a cleaning fluid 16 (see below). The shroud tubes 72, the receiving cavity 74 and the bore 76 are parts of the connecting region 15.

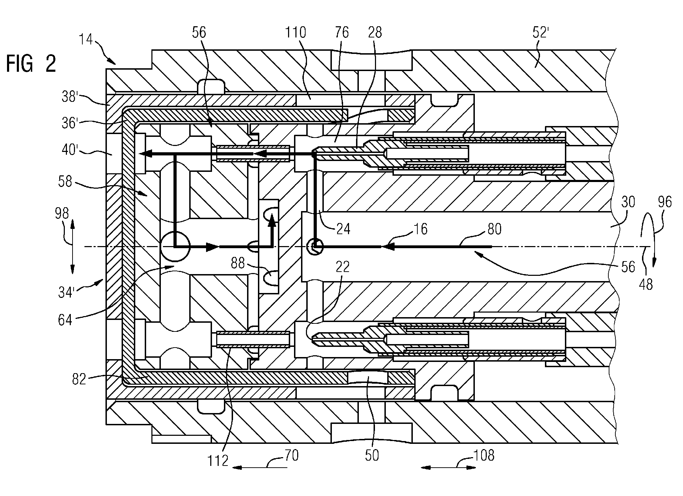

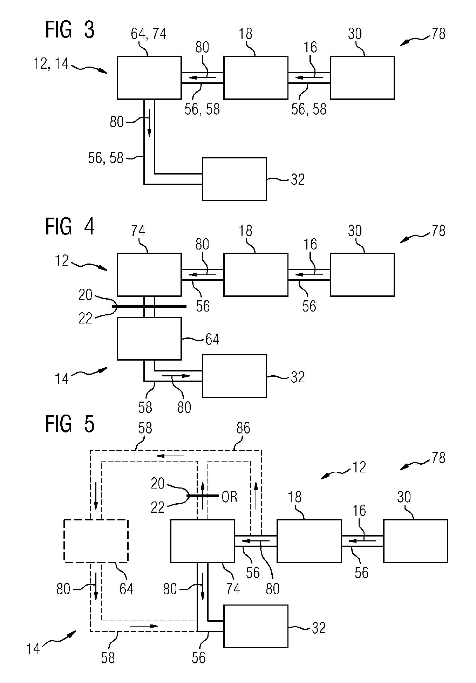

To remove contaminates or to clean the connector parts 12, 14 or specifically, the optical fibres 26, 28 with their connecting faces 20, 22 the connector unit 10 comprises a first protecting mechanism in the form of a cleaning mechanism using a fluid 16 and a cleaning arrangement 78 (see FIG 3). The cleaning arrangement 78 comprises a dual action pump 18 and two storage reservoirs 30, 32 for the fluid 16 for each connector part 12, 14 and connecting channels 56, 58 or manifolds in the connector parts 12, 14 that provide a flow path 80 for the fluid 16 (see FIG 2 and 3).

The fluid 16 is a fluid 16 that changes its viscosity due to an applying of an increased shear stress and specifically, by applying a pressure increase. The fluid 16 changes its viscosity from a first viscosity to a second viscosity, wherein the first velocity is less viscous than the second viscosity. Consequently, the fluid becomes flowable after the pressure increase. Thus, the fluid 16 is a thixotropic fluid 16 or gel (details see below). Moreover, to provide an unhindered optical connection between the connecting faces 20, 22 even if a small amount of the fluid 16 will be trapped between the connecting faces 20, 22 the fluid 16 is also an optical fluid 16 or gel. This fluid 16 has a refractive index matched to that of the optical fibre 26, 28. The fluid 16 may for example be NyoGel OC-431A, Cargille 0608 or Thorlabs G608N.

The pressure increase and thus the change of the viscosity of the fluid 16 and its flow are induced by the dual action pump 18. The dual action pump 18 is actuate and/or activated due to the mate or de-mate of the connector parts 12, 14. Specifically, in case of the mate it is activated through a volume displacement forced by the movement of an insert 82 of the female part 14 in moving direction 70 against a compression spring 84. The dual action pump 18 establishes the flow of the fluid 16 or will force the fluid 16 through the connecting channels 56, 58 and the receiving cavities 64, 74 in which the optical fibres 26, 28 are located. The flow of the fluid 16 will remove contaminates from, on and around the optical fibre 26, 28 or ferrules. The pumping of the fluid 16 and hence the cleaning and flushing of the connector parts 12, 14 or their optical fibres 26, 28 with the connecting faces 20, 22, respectively, will occur throughout the mating and de-mating processes (via the use the dual action pump 18).

The optical fibres 26, 28 or ferrules in both connector parts 12, 14 will be surrounded and protected by the thixotropic optical fluid 16. Thixotropic fluid materials will maintain a viscous gel state when static (such as in the de-mated or mated position of the connector unit 10), but under shear stress they will become less viscous, and therefore able to flow as if liquid. During the mating of the connector parts 12, 14 the fluid 16 will be pumped by the mechanism of the integrated dual action pump 18 and therefore flow around the ferrules and to the storage reservoir 32. Once the connector unit 10 has mated, the pumping will cease and the fluid 16 will return to its more viscous state.

The unused or clean fluid 16 is stored in the first storage reservoir 30 beforehand of the mate and the used or contaminated fluid 16 is stored in the storage reservoir 32 after the mate. Since a storage capacity of the storage reservoirs 30, 32 is designed to store fluid for approximately 250 mate and de-male cycles it should be clear, that only a fraction of the clean fluid 16 is used for the respective cleaning during the mate and the rest is still stored in the storage reservoir 30 for subsequent mates during the current mate. Moreover, already used or dirty fluid 16 resulting from a previous mate is stored in storage reservoir 32 during the current mate.

To provide the transfer of the fluid 16 the storage reservoirs 30, 32 are in flow communication with each other via the connecting channels 56, 58 of the connector parts 12, 14. This is shown in the block diagram of FIG 3, wherein the diagram shows one arrangement that is identical for both connector parts 12, 14. Thus, the storage reservoirs 30, 32 of the connector part 12 are connected via the connecting channel 56 and the storage reservoirs 30, 32 of the connector part 14 are connected via the connecting channel 58.

In the connecting channel 56 of the male part 12 the receiving cavities 74 of the shroud tubes 72 is located where the cleaning of the optical fibre 26 by the flow of the fluid 16 is performed. Further, in the connecting channel 58 of the female part 14 the receiving cavity 64 is located where the cleaning of the optical fibre 28 by the flow of the fluid 16 is performed. The flow of the fluid 16 is done by a dual action pump 18, which is positioned in the respective connecting channel 56, 58 shortly after the storage reservoir 30 for the clean fluid 16.

In FIG 4 and 5 two alternative embodiments of the cleaning arrangement 78 are shown. Components, features and functions that remain identical are in principle substantially denoted by the same reference characters. The following description is confined substantially to the differences from the embodiment in FIG 1 to 3, 6 to 9 and 12 to 14, wherein with regard to components, features and functions that remain identical reference may be made to the description of the embodiment in FIG 1 to 3, 6 to 9 and 12 to 14.

FIG 4 and 5 show alternative embodiments of the cleaning arrangement 76. The embodiment from FIG 4 differs in regard to the embodiment according to FIG 1 to 3, 6 to 9 and 12 to 14 in that storage reservoirs 30, 32 and respective connecting channels 56, 58 are arranged in different connector parts 12, 14. For example, the storage reservoir 30 for a clean fluid 16 and the connecting channel 56 are arranged in the connector part 12 and the storage reservoir 32 for the used fluid 16 and the connecting channel 58 are arranged in the other connector part 14. By this arrangement, the connecting channel 56 ends in receiving cavities 74 of shroud tubes and the connecting channel 58 originated at a receiving cavity 64 of the female part 14. In between are connecting faces 20, 22 arranged to build the optical connection (schematically shown as black line). Thus, the storage reservoirs 30, 32 are only in flow communication during the mate.

General, it would be also possible to have a vice versa arrangement, namely, a male part has a storage reservoir for a dirty fluid and the female part for a clean fluid (not shown).

The embodiment from FIG 5 differs in regard to the embodiment according to FIG 1 to 3, 6 to 9 and 12 to 14 in that only one connector part 12 comprises storage reservoirs 30, 32 and a connecting channel 56, connecting the storage reservoirs 30, 32 and comprising receiving cavities 74 in shroud tubes. To clean a second connector part 14 a connecting channel 58 in the second part 14 is coupled to the connecting channel 56 during a mate of the connector parts 12, 14. The coupling could be done either at the connecting faces 20, 22 of the connector parts 12, 14 or the fluid 16 coming from a dual action pump 16 will be split off in the traditional channel 56, leading to the receiving cavity 74, and in a separate channel 86 extending from a point beforehand of the receiving cavity 74 in the connecting channel 56 to the receiving cavity 64 of the connector part 14. After the cleaning of both optical fibres the dirty fluid 16 is then returned to the storage reservoir 32 for the used fluid 16 in the connector part 12.

In general, it would be also possible to have a vice versa arrangement, namely, a female part has storage reservoirs and a channel that ends in a receiving cavity, and a male part with receiving cavities in shroud tubes has solely a connecting channel (not shown).

Referring back to FIG 2 in which the flow path 80 of the fluid 16 is shown exemplarily for the female part 14. The fluid 16 travels along the connecting channel 58 to the plug front end 62 and exits the connecting channel through a nozzle assembly 24 into the receiving cavity 64. The nozzle assembly 24 directs the fluid purposefully to the connecting face 22 or end face 22 of the optical fibre 28. Thus, the fluid 16 travels over the connecting face 22 to actively cleaning contaminants from the face 22. Removed contaminants will be carried away by the fluid 16 traveling along connecting channel 58 and exiting through an exhaust port 88 into the storage reservoir 32. At the same time the fluid 16 also cleans the connecting region 15' or the area around the ferrule due to the flushing of the surrounding space. Hence, the receiving cavity 64 is filled with fluid 16 consequently flushing the mating environment.

A flow path of the fluid 16 along connecting channel 56 in the male part 12 is embodied analogously to the shown flow path 80 (not shown in detail).

In the unmated state of the connector unit 10 the fluid 16 is hindered from exiting the respective receiving cavity 64, 74 by a shutter unit 34, 34' that thus functions as a seal in the unmated state. Each shutter unit 34, 34' (of the male part 12 and of the female part 14) comprises a first shutter 36, 36'and second shutter 38, 38', wherein both shutters 36, 36', 38, 38' are embodied as a sleeve 90 having a cylinder barrel 92 and a bottom 94 extending perpendicular to the barrel 92 and in the mounted state in the connector unit 10 perpendicular to an axis 48 of the connector part 12, 14 or in axial direction 108. Arranged in the connector unit 10 the bottom 94 of the shutter unit 34' of the female part 14 is arranged flush with a casing 52' of the shutter unit 34'. The first and the second shutter 36, 36', 38, 38' each comprises a plurality of circular apertures 40, 40' 42, 42' arranged in the bottom 94 and distributed homogenously in circumferential direction 96 over a circumference of the bottom 94 of the sleeve 90.

Moreover, the first shutter 36, 36' and the second shutter 38, 38' are arranged coaxially in respect to the axis 48 of the connector part 12, 14 and towards each other. Further, the second shutter 38, 38' is arranged inside of the first shutter 36, 36' and thus, the first shutter 36, 36' is arranged in radial direction 98 outwardly in respect to the second shutter 38, 38'and encompasses the second shutter 38, 38'. Hence, the first shutter 36, 36' is an external shutter 36, 36' and the second shutter 38, 38' is an internal shutter 38, 38'.

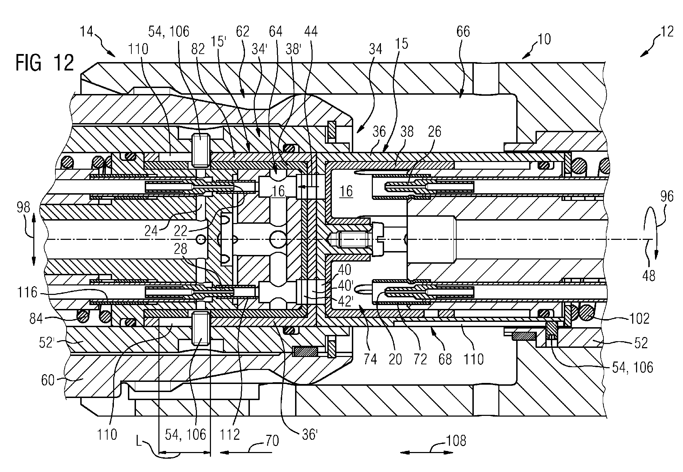

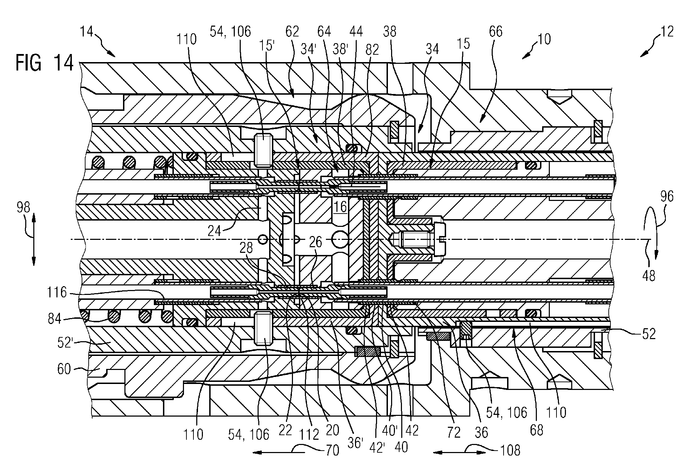

The first or external shutter 36, 36' is attached radially fixed to the casing 52, 52' of the respective connector part 12, 14 and the second or internal shutter 38, 38' is arranged rotatable in respect to the first shutter 36, 36' and thus the casing 52, 52'. The rotational axis 48 of the second shutter 38, 38' is the axis 48 of the respective connector part 12, 14. The first shutter 36, 36' and the second shutter 38, 38' are rotatable in such a way that in at least one rotational state the apertures 40, 40' of the first shutter 36, 36' and the apertures 42, 42' of the second shutter 38, 38' are arranged flush with each other. Hence, a passage 44 for a connecting part 46 embodied as the respective optical fibre 26, 28 comprising the connecting face 20, 22 is established (See arrows with reference numeral 44 in FIG 12 to 14. It should be noted, that the arrow of reference numeral 44 in FIG 14 extends through the optical fibre 26 solely for illustrational purpose to symbolise the passage 44 through the holes 40, 42, 40', 42'. In this embodiment no fluid 16 is flowing through the optical fibres 26, 28. In general, there may be applications where such an embodiment may be employed).

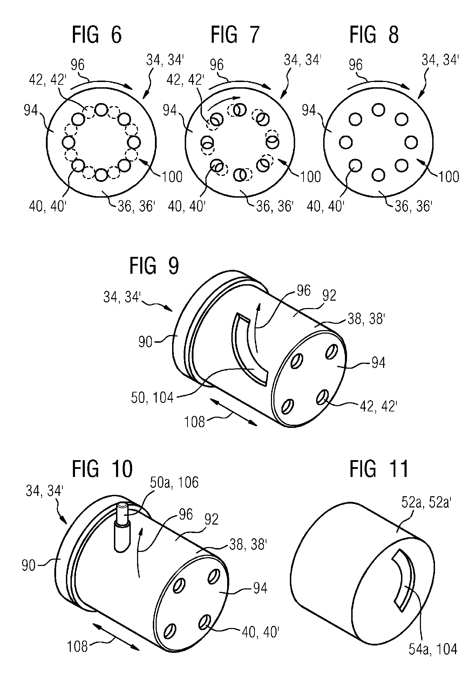

This could be seen in FIG 6 to 8, which show in a front view the different configurations of the apertures 40, 40', 42, 42' of the shutters 36, 36', 38, 38' for different mating stages of the connector unit 10, wherein the apertures 42, 42' of the internal shutter 38, 38' are shown in hashed lines due to their (partially) hidden positioning in the closed state (FIG 6) and in the mid open state (FIG 7). Due to the circumferential alignment of the apertures 42, 42' of the internal shutter 38, 38' with the apertures 40, 40' of the external shutter 36, 36' they are not shown in FIG 8.

In the configuration shown in FIG 6 the shutter unit 34, 34' is closed due to the coverage or overlap of the apertures 40, 40', 42, 42' with respective solid parts 100 of the bottom 94 of the respective sleeve 90. This is the case in the unmated state and the first mating stage of the connector unit 10 (see FIG 1 and 2).

The configuration shown in FIG 7 is a transitional state during the mating where the internal shutter 38, 38' rotates and the apertures 40, 40', 42, 42' start to overlap or align with its respective aperture 40, 40', 42, 42'. This state occurs for the shutter unit 34, 34' of the male part 12 and the female part 14 at different time points of the mate (see below).

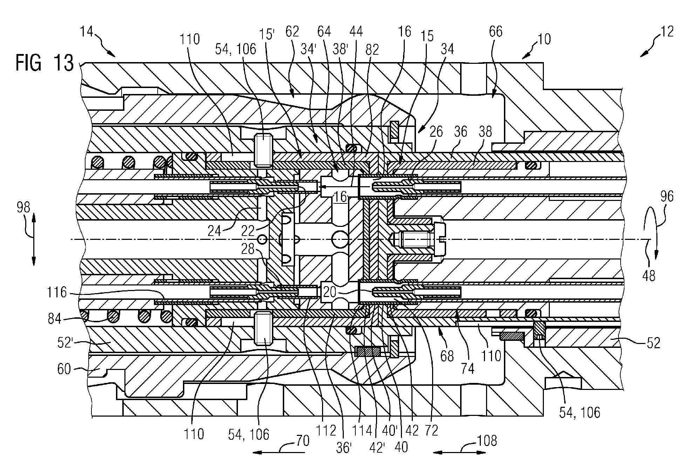

FIG 8 shows the configuration of the apertures 40, 40', 42, 42' during the final mating stage (see FIG 13) and in the fully mated state of the connector unit 10 (see FIG 14). Here the apertures 40, 40', 42, 42' are fully aligned with their respective partner aperture 40, 40', 42, 42' and the passage 44 is established.

The rotation of the shutters 36, 36', 38, 38' towards each other or of the second shutter 38, 38' is activated by the mate or the de-mate of the connector parts 12, 14. This is cause by an induced axial displacement of the shutter unit 34, 34' in combination with a shutter mechanism of the shutter unit 34, 34' (details see below). In case of the mating process it is a displacement of the shutter unit 34' of the female part 14 in moving direction 70 against spring 84 (see FIG 12) and for the shutter unit 34 of the male part 12 it is a displacement of the receptacle assembly 68 comprising the ferrules and the shroud tubes 72 in moving direction 70 against the now compresses spring 84 (see FIG 12). For the de-mate sequence the displacements are first, the expansion of a compressed spring 102 of the male part 12 retracting the receptacle assembly 68 against the moving direction 70 and second, the expansion of the compressed spring 84 of the female part 14 pushing the shuttle unit 34' of the female part 14 against the moving direction 70.

The shutter mechanism of the shutter units 34, 34' for opening or closing the apertures 40, 40', 42, 42' of the shutters 36, 36', 38, 38' and for causing the rotation of the second, internal shutter 38, 38' is mediated by an action member 50 of the internal shutter 38, 38' and an corresponding action structure 52 of the respective casing 52, 52' of the connector part 12, 14 interacting with the action member 50.

In this exemplary embodiment that is shown in FIG 1 and 9 the action member 50 of the internal shutter 38, 38' is embodied as a helical keyway 104 and the action structure 54 of the casing 52, 52' as a key 106 engaging in the keyway 104 (In FIG 9 the external shutter 36, 36' is not shown for clarity. Further, the engagement of the key 106 of the male part 12 in its respective keyway 104 as well as a passing of this key 104 through an opening 110 (see below) in the external shutter 36 could not be seen in FIG 1 and 12 to 14). Due to this arrangement, the action member 50 and the action structure 54 are arranged rotateably in respect to each other. Specifically, the key 106 is in a rotationally and axially fixed position and the helical keyway 104 is moveable or rotateable about the key 106.

The geometry of the keyway 104 is selected in respect to the distance of the axial displacement of the shutter unit 34' or the receptacle assembly 68 and to the amount of rotation needed to open or close the apertures 40, 40', 42, 42'. Thus, the keyway 104 is a helical keyway 104 (see arrow in FIG 9) with directional vectors in axial direction 108 and circumferential direction 96.

As could for example be seen in FIG 1 the rotateably fixed first or external shutter 36, 36' comprises an opening 110 in the axial height of the key 106 and the keyway 104 to allow the key 106 to bypass or radially bridge the external shutter 36, 36' to engage in the keyway 104. The opening 110 has an axial length L to allow the axial displacement of the shutter unit 34' or the receptacle assembly 68 in respect to the fixed action structure 54 of the casing 52, 52'. Moreover, to provide a homogeneous rotation the shutter unit 34, 34' and the casing 52, 52' comprises two action members 50 or keyways 104 and corresponding action structures 54 and keys 106 e.g. on two opposed sides of the shutter unit 34, 34'.

In FIG 10 and 11 alternative embodiments of the internal shutter 38, 38' and the casing 52, 52' of the shutter mechanism are shown. Components, features and functions that remain identical are in principle substantially denoted by the same reference characters. To distinguish between the embodiments, however, the letter "a" has been added to the different reference characters of the embodiment in FIG 1 to 3, 6 to 9 and 12 to 14. The following description is confined substantially to the differences from the embodiment in FIG 1 to 3, 6 to 9 and 12 to 14, wherein with regard to components, features and functions that remain identical reference may be made to the description of the embodiment in FIG 1 to 3, 6 to 9 and 12 to 14.

The embodiments from FIG 10 and 11 differ in regard to the embodiment according to FIG 1 to 3, 6 to 9 and 12 to 14 in that the action member 50a of an internal shutter 38a, 38a' is embodied as a key 106 and an action structure 54a of a casing 52a, 52a' of the male part or female part (not shown) is embodied as a keyway 104.

With respect to FIG 1 and 12 to 14 the mating sequence will be described in the following text:
As could be seen in FIG 1 the connector parts 12, 14 engage, wherein the plug front end 62 passes into the housing 60 of the receptacle front end 66. Subsequently, the external fixed shutters 36, 36' of both connector parts 12, 14 come into coarsely aligned contact. Specifically, the bottom 94 of the shutter unit 34 of the male part 12 abuts the shutter unit 34' of the female part 14 being arranged flush with its casing 52'. The apertures 40, 40' of the external shutters 36, 36' of both shutter units 34, 34' are circumferentially and axially aligned with each other, wherein the apertures 42, 42' of the internal shutters 38, 38' are arranged off-set in respect to the apertures 40, 40' of the external shutters 36, 36' (apertures 42, 42' are not shown in FIG 1).

The next mating stage can be seen in FIG 12, where it is shown that the insert 82 of the female part 14 is pushed back on the spring 84 that is weaker than the spring 102 of the receptacle assembly 68. This action causes a volume displacement and fluid 16 pumped by the dual action pump 18 passes the connecting face 22 of the optical fibre 28 of the female part 14 and through split sleeves 112 in the receiving cavity 64. At the same time the split sleeves 112 are pushed towards the optical fibres 28 or the ferrules of the female part 14 and the female ferrules engage with the split sleeves 112. The axial displacement of the shutter unit 34' of the female part 14 is possible due to the axial opening 110 in the external shutter 36' (note that the key 106 is now at the right hand side of the opening 110). The external shutter 36' remains in a radially fixed position.

At the same time the internal shutter 38' of the female part 14 rotates as it has the helical keyway 104 which runs against the fix key 106 within the casing 52' of the female part 14. This can be seen by the alignment of the apertures 40' of the internal shutter 38' with the apertures 42' of the external shutter 36' of the shutter unit 34' of the female part 14. The insert 82 of the female part 14 is now fully depressed and subsequently the receptacle assembly 68 starts to depress due to the further movement in moving direction 70. The shroud tubes 72 and the optical fibres 26 or the ferrules within them stay in a forward position, held forward by the spring 102.

At the same time the internal shutter 38 of the male part 12 starts to rotate as it has the helical keyway 104 which runs against the fixed key 106 within the casing 52 of the receptacle assembly 68. Thus, the apertures 40 of the internal shutter 38 are aligned with the apertures 42 of the external shutter 36 of the shutter unit 34 of the male part 12 as well as with the apertures 40', 42' of the shutter unit 34' of the female part 14. Now the passage 44 is build through which the optical fibres 26 of the male part 12 can protrude from it into the female part 14 (see below).

The shroud tubes 72 and the optical fibres 26 within them pass through the open shutter units 34, 34' of both connector parts 12, 14 with a barrier of fluid 16 protecting the optical fibres 26, 28/ferrules with their connecting faces 20, 22 from contamination. Fluid 16 continues to be injected, moving contamination out of the way of the mating environment. This could be seen in FIG 13.

Since the shroud tubes 72 abut against a shoulder 114 of the insert 82 of the female part 14 the optical fibres 26/ferrules of the male part 12 emerge in axial direction 108 from the shroud tubes 72 and make a clean, aligned mate with the optical fibres 28/ferrules of the female part 14 within the split sleeve 112. Thus, the split sleeves 112 are used to align two ferrules. This fully mated state is shown in FIG 14. The correct amount of ferrule engagement force is maintained by a spring on the rear of mounting tubes 116 of the female part 14. The spring is located radially between the optical fibre 28 and the mounting tube 116 (not shown in detail). To hold the two connector parts 12, 14 locked together and in an axially fixed position after the mate the female part 14 or its housing 60 has a snap ring, which locates into a snap ring groove in the male part 12 or its housing 60 (not shown).

After the connector unit 10 is fully mated the dual action pump 18 is deactivated and the fluid 16 returns due to the decrease of the pressure from its second flowable viscosity back to its first more static viscosity. The fluid 16 now fills/flushes the connecting regions 15, 15' and surrounds the optical fibres 26, 28. This provides and maintains a clean mating environment as well as a second protection mechanism in the form of a barrier mechanism protecting the optical fibres from detrimental effects in the mated state.

The de-mating process of the connector unit 10 is accomplished in the reverse of this sequence with fluid 16 being injected by the double acting pump 18 (not shown in detail).

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

Although the invention is illustrated and described in detail by the preferred embodiments, the invention is not limited by the examples disclosed, and other variations can be derived therefrom by a person skilled in the art without departing from the scope of the invention.

## Claims

1. Method for protecting a connector unit (10) comprising a first connector part (12, 14) and at least a second connector part (12, 14) each having a connecting region (15, 15'), wherein the first connector part (12, 14) and the at least second connector part (12, 14) are embodied in such a way to establish a physical connection after a mate of the first connector part (12, 14) and the at least second connector part (12, 14), wherein at least one connecting region (15, 15') of the first connector part (12, 14) and/or of the at least second connector part (12, 14) is protected by a fluid (16),
**characterised by** the step of:
- Using a fluid (16) that is embodied in such a way to change its viscosity to protect the at least one connecting region (15, 15').

2. Method according to claim 1,
wherein the method comprises the step of:
- Providing a first protection mechanism, especially a cleaning mechanism, by changing the viscosity of the fluid (16) from a first viscosity to a second viscosity and
- Providing a second protection mechanism, especially a barrier mechanism, by changing the viscosity of the fluid (16) from the second viscosity back to the first viscosity.

3. Method according to claims 1 or 2,
wherein the method comprises the step(s) of:
- Changing the viscosity of the fluid (16) by applying an increased shear stress, and specifically by applying a pressure increase.

4. Method according to any one of the preceding claims, wherein the method comprises the step(s) of:
- Inducing a flow of the fluid (16) by changing the viscosity of the fluid (16) to clean the at least first connector part (12, 14) and/or
- Cleaning the at least first connector part (12, 14) with the flow of the fluid (16) throughout the mate of the first connector part (12, 14) and the at least second connector part (12, 14) and/or
- Cleaning the at least first connector part (12, 14) with the flow of the fluid (16) throughout a de-mate of the first connector part (12, 14) and the at least second connector part (12, 14) and/or
- Cleaning the at least second connector part (12, 14) with the flow of the fluid (16), especially throughout the mate and/or de-mate of the first connector part (12, 14) and the at least second connector part (12, 14).

5. Method according to any one of the preceding claims, wherein the method comprises the step(s) of:
- Activating the change of viscosity by the mate of the first connector part (12, 14) and the at least second connector part (12, 14) and/or
- Activating the change of viscosity by a de-mate of the first connector part (12, 14) and the at least second connector part (12, 14) and/or
- Establishing the flow of the fluid (16) by a dual action pump (18).

6. Connector part (12, 14) of a connector unit (10) comprising a connecting region (15, 15') and being embodied in such a way to establish a physical connection after a mate of the connector part (12, 14) and an at least second connector part (12, 14) of the connector unit (10), wherein at least one connecting region (15, 15') of the first connector part (12, 14) and/or of the at least second connector part (12, 14) is protected by a fluid (16),
**characterised in that** the fluid (16) is a fluid (16) that changes its viscosity, especially due to an applying of an increased shear stress, and specifically by applying a pressure increase.

7. Connector part according to claim 6,
wherein the fluid (16) is at least one thixotropic fluid (16).

8. Connector part according to claims 6 or 7,
comprising at least a first optical fibre (26, 28), wherein the first optical fibre (26, 28) and an at least second optical fibre (26, 28) of the at least second connector part (12, 14) are embodied in such a way to establish an optical connection after a mate of the first connector part (12, 14) and the at least second connector part (12, 14) and/or comprising at least one connecting face (20, 22), wherein the connecting face (20, 22) is an end face (20, 22) of the at least first optical fibre (26, 28) and/or comprising at least one nozzle assembly (24) that directs the fluid purposefully to the connecting face (20, 22).

9. Connector part according to claims 6 or 8,
comprising a first storage reservoir (30, 32) and at least a second storage reservoir (30, 32) for the fluid (16), wherein the first storage reservoir (30, 32) and the at least second storage reservoir (30, 32) are in flow communication with each other at least during the mate of the first connector part (12, 14) and the at least second connector part (12, 14).

10. Connector part according to claims 6 to 9,
comprising a shutter unit (34, 34') with a first shutter (36, 36'; 38, 38', 38a, 38a') and at least a second shutter (36, 36'; 38, 38', 38a, 38a'), wherein the first shutter (36, 36'; 38, 38', 38a, 38a') and the at least second shutter (36, 36'; 38, 38', 38a, 38a') each comprises at least one aperture (40, 40'; 42, 42') and/or wherein the first shutter (36, 36'; 38, 38', 38a, 38a') and the at least second shutter (36, 36'; 38, 38', 38a, 38a') are rotatable in such a way that in at least one rotational state the at least one aperture (40, 40'; 42, 42') of the first shutter (36, 36'; 38, 38', 38a, 38a') and the at least one aperture (40, 40'; 42, 42') of the at least second shutter (36, 36'; 38, 38', 38a, 38a') are arranged flush with each other especially, to establish a passage (44) for at least one connecting part (46) comprising a connecting face (20, 22) and/or wherein the connecting part (46) is an at least first optical fibre (26, 28).

11. Connector part according to claim 10,
wherein a rotational axis (48) of the first shutter (36, 36'; 38, 38', 38a, 38a') and/or the at least second shutter (36, 36'; 38, 38', 38a, 38a') is an axis (48) of the connector part (12, 14).

12. Connector part at least according to claims 10 or 11, wherein the rotation of the first shutter (36, 36'; 38, 38', 38a, 38a') and the at least second shutter (36, 36'; 38, 38', 38a, 38a') towards each other is activated by the mate or the de-mate of the first connector part (12, 14) and the at least second connector part (12, 14).

13. Connector part according to any one of claims 9 to 12, wherein the shutter unit (34, 34') comprises at least one action member (50, 50a) for opening or closing the apertures (40, 40'; 42, 42') of the first shutter (36, 36'; 38, 38', 38a, 38a') and the at least second shutter (36, 36'; 38, 38', 38a, 38a') and/or for causing the rotation of the first shutter (36, 36'; 38, 38', 38a, 38a') and the at least second shutter (36, 36'; 38, 38', 38a, 38a') towards each other and/or wherein a casing (52, 52a) of the connector part (12, 14) comprises at least one corresponding action structure (54, 54a) for interaction with an action member (50, 50a) of the shutter unit (34) and/or wherein the action member (50, 50a) and the action structure (54, 54a) are arranged rotateably in respect to each other.

14. Connector unit (10) with a first connector part (12, 14), according to any one of claims 6 to 12 and with at least a second connector part (12, 14), wherein the first connector part (12, 14) and the second connector part (12, 14) are embodied in such a way to establish a physical connection after a mate of the first connector part (12, 14) and the at least second connector part (12, 14),
**characterised by** a first storage reservoir (30, 32) and at least a second storage reservoir (30, 32) for a fluid (16), wherein the first storage reservoir (30, 32) and the at least second storage reservoir (30, 32) are in flow communication with each other via at least one connecting channel (56, 58) of the first connector part (12, 14) and/or the second connector part (12, 14) at least during the mate of the first connector part (12, 14) and the at least second connector part (12, 14).

15. Use of a connector part (12, 14) according to claims 6 to 13 in a subsea application.
